# EUROPÄISCHE PATENTANMELDUNG

(11) **EP 2 239 098 A1**
(43) Veröffentlichungstag der Anmeldung: **13.10.2010**
(21) Anmeldenummer: 10159407.5
(22) Anmeldetag: 08.04.2010
(51) Int. Cl.: B25B 11/00, B65G 7/12

(54) **Saugheber zur temporären Fixierung an einer Werkstückoberfläche**

(30) Priorität: 08.04.2009 DE 102009016625
(71) Anmelder: Bohle AG, 42781 Haan (DE)
(72) Erfinder: Ostendarp, Dr., Heinrich, 42781, Haan (DE)
(74) Vertreter: Cohausz & Florack

(57) **Zusammenfassung**

Die Erfindung betrifft einen Saugheber (2) zur temporären Fixierung an einer Werkstückoberfläche, mit einem formsteifen Strukturelement (8), mit wenigstens einer flexiblen Saugscheibe (10) und mit wenigstens einem Mittel zur Erzeugung und/oder Bereitstellung eines Unterdrucks in einem inneren Bereich (14) der Saugscheibe (10). Der Erfindung liegt die Aufgabe zu Grunde, einen Saugheber (2) anzugeben, welcher einfacher zu handhaben ist und bei dem insbesondere ein einfaches Lösen des Saughebers (2) von einer Werkstückoberfläche ohne zusätzliche Maßnahmen gewährleistet ist. Die Aufgabe wird dadurch gelöst, dass die Saugscheibe (10) einen den inneren Bereich (14) umgebenden Randbereich (18) aufweist, wobei der Randbereich (18) zumindest bereichsweise eine sich vom äußeren Rand (16) des Randbereichs (18) bis zum inneren Bereich (14) erstreckende Oberflächliche Mikrostrukturierung mit Erhebungen und Senken aufweist, wobei die Mikrostrukturierung im betätigten Zustand des Saughebers (2) durch die durch den Unterdruck erzeugte Anpresskraft auf die Werkstückoberfläche nivelliert ist und im unbetätigten Zustand sich derart regeneriert, dass eine gasleitende Verbindung zwischen der Umgebung (20) und dem inneren Bereich (14) hergestellt wird.

## Beschreibung

Die Erfindung betrifft einen Saugheber zur temporären Fixierung an einer Werkstückoberfläche, mit einem formsteifen Strukturelement, mit wenigstens einer flexiblen Saugscheibe und mit wenigstens einem Mittel zur Erzeugung und/oder Bereitstellung eines Unterdrucks in einem inneren Bereich der Saugscheibe.

Saugheber der eingangs genannten Art sind aus dem Stand der Technik bekannt. Sie können insbesondere zum Heben von Glas-, Keramik- oder Metallplatten verwendet werden. Bei diesen Saughebern besteht regelmäßig das Problem, dass die flexible Saugscheibe nach dem Abbau des Unterdrucks nach wie vor an der Werkstückoberfläche anhaftet (Saugnapfeffekt) und somit nicht ohne zusätzlichen Kraftaufwand von der Oberfläche abgenommen werden kann.

Zur Lösung dieses Problems wird in der Gebrauchsmusterschrift DE 201 03 755 U1 vorgeschlagen, bei einem Saugheber mit zwei Saugscheiben bei jeder Saugscheibe auf ihrer dem zu haltenden Werkstück zugewandten Seite eine linear radial verlaufende Nut vorzusehen. Reicht der von einem Betätigungsmechanismus zum Aufbau und Abbau eines Unterdrucks hervorgerufene Druckausgleich beim beabsichtigten Lösen des Saughebers von der Werkstückoberfläche nicht aus, die Anpresskraft der Dichtlippe der Saugscheibe an die Werkstückoberfläche so zu verringern, dass sich der Saugheber leicht entfernen lässt, kann der Bediener des Saughebers an einem auf der dem Werkstück abgewandten Seite angeordneten Nippel der Lippe diese von der Werkstückoberfläche manuell abheben, so dass Luft in den inneren Bereich der Saugscheibe einströmen kann, wodurch der Druckausgleich abgeschlossen wird.

Nachteilig an dem vorstehend beschriebenen Saugheber ist, dass der Bediener stets eine Hand frei haben muss, um die Dichtlippe zum endgültigen Lösen des Saughebers von der Werkstückoberfläche über den Nippel anzuheben. Entsprechend ist die Bedienungsfreundlichkeit des bekannten Saughebers, beispielsweise während komplizierter Montagearbeiten, nicht optimal.

Hiervon ausgehend liegt der vorliegenden Erfindung die Aufgabe zu Grunde, einen Saugheber anzugeben, welcher einfacher zu handhaben ist und bei dem insbesondere ein einfaches Lösen des Saughebers von einer Werkstückoberfläche ohne zusätzliche Maßnahmen gewährleistet ist.

Die Aufgabe wird mit einem Saugheber gemäß dem Oberbegriff des Patentanspruchs 1 dadurch gelöst, dass die Saugscheibe einen den inneren Bereich umgebenden, durch das formsteife Strukturelement definierten Ringbereich aufweist, auf welchem die Gehäuseschale auf der der Werkstückoberfläche abgewandten Seite der Saugscheibe aufliegt und in welchem das Material der Saugscheibe im betätigten Zustand des Saughebers komprimiert wird, wobei der Ringbereich zumindest im Bereich maximaler Kompression und bezogen auf seine Umfangserstreckung zumindest abschnittsweise eine Oberflächen-Mikrostrukturierung mit Erhebungen und Senken aufweist, wobei die Oberflächen-Mikrostrukturierung im betätigten Zustand des Saughebers durch die durch den Unterdruck erzeugte Anpresskraft auf die Werkstückoberfläche nivelliert ist und im unbetätigten Zustand sich derart regeneriert, dass eine gasleitende Verbindung zwischen der Umgebung und dem inneren Bereich hergestellt wird.

Der Erfindung liegt die Überlegung zu Grunde, einen Saugheber bereitzustellen, welcher beim Übergang von dem betätigten Zustand in den unbetätigten Zustand, also beim Abbau des Unterdrucks, im Wesentlichen selbsttätig eine ausreichende Belüftung des inneren Bereichs der Saugscheibe ermöglicht, so dass es nicht notwendig ist, den Druckausgleich manuell - beispielsweise durch Anheben des Randbereichs von der Werkstückoberfläche - zu unterstützen. Auf diese Weise kann die Handhabung des Saughebers vereinfacht werden. Ein Verwender des Saughebers kann seine Konzentration verstärkt auf andere Arbeitsschritte als auf das Lösen des Saughebers richten und wird dadurch entlastet.

Erreicht wird diese vorteilhafte, im Wesentlichen selbsttätige Belüftung beim Übergang vom betätigten Zustand in den unbetätigten Zustand durch eine bestimmte Oberflächen-Mikrostrukturierung wenigstens eines Umfangsabschnitts des Ringbereichs der Saugscheibe, auf welchem die Gehäuseschale auf der der Werkstückoberfläche abgewandten Seite der Saugscheibe aufliegt. Die Oberflächen-Mikrostrukturierung ist mit Erhebungen und Senken so ausgestaltet, dass sie im unbetätigten Zustand des Saughebers eine gasleitende Verbindung zwischen der Umgebung und dem inneren Bereich ermöglicht, beispielsweise indem Luft durch die als Verbindungskanäle fungierenden Senken vom Rand über den Randbereich der Saugscheibe in den inneren Bereich strömen kann. Im betätigten Zustand hingegen werden die Erhebungen und Senken durch die durch den Unterdruck erzeugte Anpresskraft nivelliert, d.h. eingeebnet, so dass eine bezogen auf den Umfang der Saugscheibe vollflächige Anlage des Randbereichs mit der Werkstückoberfläche erzeugt wird. Auf diese Weise werden die gasleitenden Verbindungskanäle zwischen der Umgebung und dem inneren Bereich der Saugscheibe zumindest teilweise verschlossen, so dass eine ausreichende Dichtheit gewährleistet ist.

Unter einer Oberflächen-Mikrostrukturierung wird erfindungsgemäß eine an der der Werkstückoberfläche zugewandten Oberfläche der Saugscheibe vorgesehene Strukturierung verstanden, bei der der Höhenunterschied zwischen den Erhebungen und Senken deutlich unter 1 mm, insbesondere deutlich unter 100 µm, liegt.

Erfindungsgemäß umfasst der Saugheber ein formsteifes Strukturelement. Dieses kann auf verschiedene Weise ausgebildet sein. Nach einer ersten Ausgestaltung der Erfindung ist das formsteife Strukturelement als auf der der Werkstückoberfläche abgewandten Seite der Saugscheibe aufliegende Gehäuseschale ausgebildet. Diese kann beispielsweise über einen an die Gehäuseschale angeformten Griff mit wenigstens einer weiteren Gehäuseschale verbunden sein, so dass der Saugheber, wie an sich aus dem Stand der Technik bekannt, eine Mehrzahl von Saugscheiben zur Erhöhung der maximalen Traglast und zur Vereinfachung der Handhabung umfasst.

Nach einer weiteren Ausgestaltung kann das formsteife Strukturelement als in die Saugscheibe eingebrachtes Versteifungselement, beispielsweise als einvulkanisierter Aluminiumring oder einvulkanisierte Aluminiumplatte, ausgebildet sein. Eine solche Bauweise kommt insbesondere dann zum Einsatz, wenn das Mittel zur Erzeugung und/oder Bereitstellung eines Unterdrucks als mobiler Pumpmechanismus zur Erzeugung des Unterdrucks bzw. als Anschlussstück für eine Unterdruckleitung ausgebildet ist, an welches über diese Unterdruckleitung eine Vakuumpumpe anschließbar ist.

Es ist ebenfalls möglich, bei einem Saugheber sowohl eine Gehäuseschale als auch ergänzend ein in die Saugscheibe integriertes Versteifungselement vorzusehen.

Das Mittel zur Erzeugung und/oder Bereitstellung eines Unterdrucks zwischen der Saugscheibe und der Werkstückoberfläche kann auf verschiedene Weise ausgebildet sein. Bevorzugt ist es als Betätigungsmechanismus zum Anheben des inneren Bereiches der Saugscheibe von der Werkstückoberfläche ausgebildet. Konkret kann der Betätigungsmechanismus einen mit einem Stößel verbundenen Hebel umfassen, wobei der Stößel an seinem Ende mit dem inneren Bereich der Saugscheibe verbunden ist. Bei Betätigung des Hebels kann dann der Stößel derart axial verlagert werden, dass der innere Bereich der Saugscheibe von der Werkstückoberfläche abgehoben wird, wodurch der Unterdruck erzeugt wird. Durch diesen einfach aufgebauten Mechanismus kann der erfindungsgemäße Saugheber vollständig autark betrieben werden.

Das insbesondere als Gehäuseschale oder als in die Saugscheibe eingebrachtes Versteifungselement ausgebildete formsteife Strukturelement fungiert als Trägerstruktur für die flexible Saugscheibe und ist zu diesem Zweck mit ihr verbunden. Ist das formsteife Strukturelement als Gehäuseschale ausgebildet, so ist das Mittel zur Erzeugung und/oder Bereitstellung eines Unterdrucks vorteilhafterweise auch an der Trägerstruktur angeordnet. Auf diese Weise wird eine besondere kompakte Bauweise des Saughebers erreicht, welche den manuellen Einsatz des Saughebers erleichtert.

Die Saugscheibe kann eine kreisförmige, ellipsenförmige, polygonale oder sonstige geeignete Randkontur aufweisen. Wichtig ist lediglich, dass der Ringbereich der Saugscheibe im betätigten Zustand eine ausreichende Kontaktfläche zum Zwecke des gasdichten Abschlusses des inneren Bereichs der Saugscheibe von der Umgebung sicherstellt und eine Kompressionskraft auf den strukturierten Ringbereich der Saugscheibe ausgeübt wird. Im Falle eines als Gehäuseschale ausgebildeten formsteifen Strukturelements übt die Gehäuseschale die Kompressionskraft auf den Ringbereich aus wobei - im Falle eines Betätigungsmechanismus - auf die Gehäuseschale wiederum der Betätigungsmechanismus eine Druckkraft ausübt.

In einer vorteilhaften Ausgestaltung des Saughebers kann die Oberflächenstrukturierung eine Höhendifferenz zwischen den Erhebungen und den Senken aufweisen, wobei die Höhendifferenz im Ringbereich zumindest im Bereich maximaler Kompression konstant ist und radial in Richtung des inneren Bereiches abnimmt. Auf diese Weise wird der Wirkungsweise des Saughebers insbesondere im Falle des vorstehend beschriebenen Betätigungsmechanismus Rechnung getragen. Denn im betätigten Zustand wird hierbei der innere Bereich der Saugscheibe von der Werkstückoberfläche angehoben, wohingegen in radialer Richtung wenigstens ein Teil des Randbereichs an der Werkstückoberfläche in Anlage bleibt, wodurch die Saugscheibe annähernd glockenförmig ausgewölbt wird. Da die Saugscheibe im Übergangsbereich von dem Ringbereich zu dem inneren Bereich im betätigten Zustand unter einem Winkel zur Werkstückoberfläche geneigt ist, ist es zweckmäßig, die Oberflächenstrukturierung in Form der Erhebungen und Senken in diesem Bereich flacher auszugestalten, um trotz der durch die gewinkelte Anordnung der Saugscheibe in diesem Übergangsbereich verringerte Anpresskraft eine gasdichte Verbindung zu ermöglichen. Im Ringbereich hingegen liegt die Saugscheibe flächig an der Werkstückoberfläche an und die Erhebungen und Senken können demnach zumindest im Bereich maximaler Kompression mit einer größeren Höhendifferenz ausgestaltet werden, da infolge der Anpresskraft die Oberflächenstrukturierung nivelliert ist. Die größere Höhendifferenz am Rand der Saugscheibe erleichtert den Druckausgleich beim Lösen des Saughebers von der Werkstückoberfläche, also beim Übergang vom betätigten Zustand in den unbetätigten Zustand.

Die erfindungsgemäß im Randbereich der Saugscheibe vorgesehene Oberflächenstrukturierung kann unterschiedliche Geometrien aufweisen. Gemäß einer vorteilhaften Ausgestaltung der Erfindung ist die Oberflächenstrukturierung im Querschnitt durch eine stetig differenzierbare Konturlinie beschreibbar. Dies bedeutet insbesondere, dass eine die Oberflächenstrukturierung beschreibende Konturlinie keinerlei Ecken, Spitzen u.ä. aufweist, da diese stets die Gefahr bergen, dass sich bei einer Kompression der Oberflächenstruktur infolge einer Betätigung des Saughebers Mikrokanäle ausbilden, welche einer vollständige Abdichtung des inneren Bereiches der Saugscheibe entgegenwirken.

Bevorzugt ist die Oberflächenstrukturierung daher wellenförmig, insbesondere sinusförmig, ausgebildet. Entsprechend bilden die Wellenberge und Wellentäler die Erhebungen und Senken der Strukturierung. Die Höhendifferenz ist hierbei demzufolge der Vertikalabstand zwischen dem höchsten Punkt eines Wellenbergs und dem tiefsten Punkt eines Wellentals. Eine Wellenform, insbesondere eine Sinuswellenform, hat den Vorteil, dass sichergestellt ist, dass Erhebungen und Senken sehr gleichmäßig ineinander übergehen, so dass die unbeabsichtigte Bildung von Mikrokanälen ausgeschlossen ist.

Nach einer weiteren Ausgestaltung der Erfindung sind die Erhebungen und Senken als Stege und Rillen ausgebildet, welche wenigstens teilweise radial, insbesondere linear radial oder spiralförmig verlaufen. Hierbei sind die Rillen und Stege bevorzugt wiederum frei von ausgeprägten Ecken, sondern weisen anstelle dessen ausgerundete Konturen auf. Auch eine Wellenstruktur wird erfindungsgemäß als ein Wechsel von Rillen und Stegen angesehen. Unter radialem Verlauf wird eine wenigstens teilweise Erstreckung in radialer Richtung, also auf das Zentrum der Saugscheibe zu, verstanden. So kann der Verlauf insbesondere linear radial oder spiralförmig ausgestaltet sein. Durch die wenigstens teilweise radiale Erstreckung wird gewährleistet, dass die Senken, beispielsweise in Form der Rillen, als gasleitende Verbindungskanäle zwischen der Umgebung und dem inneren Bereich der Saugscheibe im unbetätigten Zustand fungieren können. Die linear radiale oder spiralförmige Ausrichtung weist überdies den Vorteil auf, in das Material der Saugscheibe oder in das Formgebungswerkzeug zu dessen Herstellung in einfacher Weise eingearbeitet werden zu können. Es können aber auch andere Geometrien der Oberflächenstrukturierung, beispielsweise eine zu einer radialen Richtung geneigte Ausrichtung, vorgesehen werden.

Das Verhältnis der Breite der Erhebungen und Senken zu der Höhendifferenz kann zwischen 5 und 1000, insbesondere bei 100, liegen. Die Breite der Erhebungen und Senken, beispielsweise in Form der Rillen und Stege, kann insbesondere zwischen 0,2 und 0,4 mm, bevorzugt 0,3 mm, betragen. Dementsprechend ergibt sich die Höhendifferenz zwischen Erhebungen und Senken dann zu Werten zwischen 0,002 und 0,007 mm, vorzugsweise 0,004 mm. Die Höhendifferenz ist durch Einhaltung dieses Verhältnisses so bemessen, dass die Nivellierung der Oberflächenstrukturierung bei der bei der Betätigung des erfindungsgemäßen Saughebers üblicherweise auftretenden Anpresskraft möglich wird, und damit der gasdichte Abschluss des inneren Bereichs von der Umgebung gewährleistet ist.

Nach einer weiteren vorteilhaften Ausgestaltung der Erfindung sind die Erhebungen und Senken der Oberflächenstrukturierung statistisch verteilt, wobei allein entscheidend ist, dass gemäß der Lehre der Erfindung die Oberflächenstrukturierung im betätigten Zustand des Saughebers durch die durch den Unterdruck erzeugte Anpresskraft auf die Werkstückoberfläche nivelliert ist und im unbetätigten Zustand sich derart regeneriert, dass eine gasleitende Verbindung zwischen der Umgebung und dem inneren Bereich hergestellt wird.

Bevorzugt erstreckt sich die Oberflächenstrukturierung von dem Ringbereich bis zum Rand der Saugscheibe. Dies erleichtert zusätzlich die Belüftung des inneren Bereiches und somit das einfache Ablösen des Saughebers von der Werkstückoberfläche.

Vorzugsweise ist die Saugscheibe aus einer Mischung aus Styrol-Butadien-Kautschuk (SBR - styrene butadiene rubber) und Naturkautschuk (NK) gebildet. Mit dieser Mischung lässt sich eine bestimmte Shore-Härte einstellen (Shore-A), welche die Nivellierung der Oberflächenstrukturierung bei Betätigung des Saughebers begünstigt. Besonders geeignet sind hierzu Shore-A-Härten zwischen 30 und 70, insbesondere 45 bis 60.

In einer weiteren vorteilhaften Ausgestaltung des Saughebers kann sich die Oberflächenstrukturierung umfangsmäßig über den gesamten Ringbereich erstrecken. Auf diese Weise kann eine gasleitende Verbindung zwischen der Umgebung und dem inneren Bereich besonders verlässlich gewährleistet werden, weil die Belüftung über eine große Fläche, und dementsprechend eine hohe Anzahl an Senken, erfolgen kann.

Es gibt vielfältige Möglichkeiten, den erfindungsgemäßen Saugheber auszugestalten und weiterzubilden. Hierzu wird einerseits auf die abhängigen Patentansprüche und andererseits auf die zur Erläuterung eines Ausführungsbeispiels beigefügten Zeichnungen verwiesen. In der Zeichnung zeigen:
- Fig. 1: eine isometrische Ansicht eines Ausführungsbeispiels eines Saughebers mit zwei Saugscheiben,
- Fig. 2: eine Saugscheibe mit Gehäuseschale und Betätigungsmechanismus als Bestandteil des Saughebers aus Fig. 1 in Schnittansicht,
- Fig. 3: eine Frontalansicht der der Werkstückoberfläche zugewandten Seite der Saugscheiben aus Figur 2 in stark vereinfachter Ansicht,
- Fig. 4: eine Detailansicht der am Randbereich der Saugscheibe angeordneten Oberflächenstrukturierung in Draufsicht gemäß der Einzelheit IV in Fig. 3,
- Fig. 5: eine Längsschnittsansicht der Oberflächenstrukturierung des Randbereichs aus Figur 4 gemäß der Schnittlinie V-V,
- Fig. 6: eine Detailansicht der Querschnittsansicht aus Figur 4 am Rand der Saugscheibe gemäß der Einzelheit VI,
- Fig. 7: die Oberflächenstrukturierung vom Rand der Saugscheibe aus radial einwärts gesehen im unbetätigten Zustand des Saughebers gemäß Pfeil VII in Figur 6,
- Fig. 8: eine weitere Detailansicht der Querschnittsansicht aus Figur 5 im Übergangsbereich vom Ringbereich bis in den inneren Bereich der Saugscheibe gemäß Einzelheit VIII und
- Fig. 9: ein Saugheber in einer zweiten Ausführungsform in seitlicher Schnittansicht.

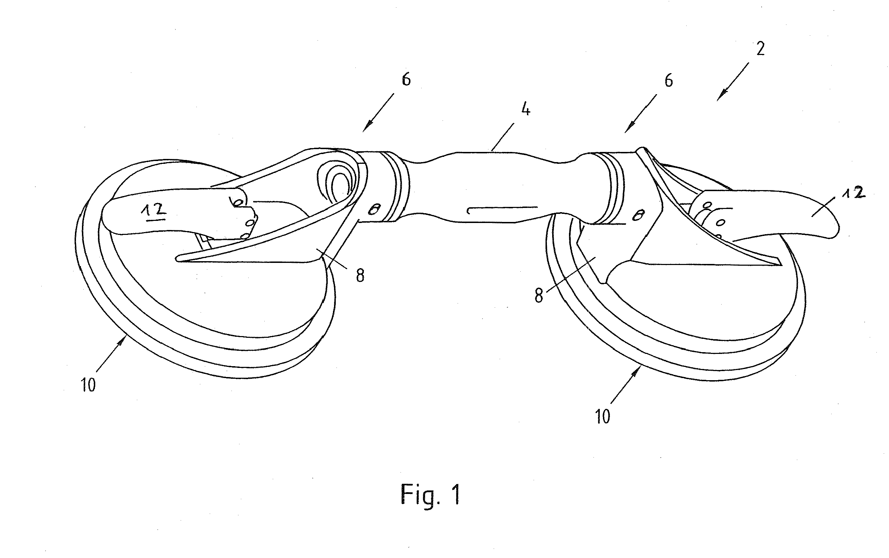

Das nachfolgend beschriebene Ausführungsbeispiel des Saughebers 2 aus Figur 1 weist einen Handgriff 4 auf, welcher zwei an seinen Endbereichen 6 angeordnete Gehäuseschalen 8 als formsteife Strukturelemente des Saughebers miteinander verbindet. Jede der Gehäuseschalen 8 weist eine Saugscheibe 10 aus einem flexiblen, vorzugsweise gummielastischen Material auf, welche am Randbereich der Gehäuseschale 8 gegen eine Werkstückoberfläche (nicht dargestellt) gedrückt werden kann. Vorliegend ist die Saugscheibe 10 aus einer Mischung aus Styrol-Butadien-Kautschuk und Naturkautschuk gebildet, wobei die Härte hier ca. 45 bis 60 Shore-A beträgt.

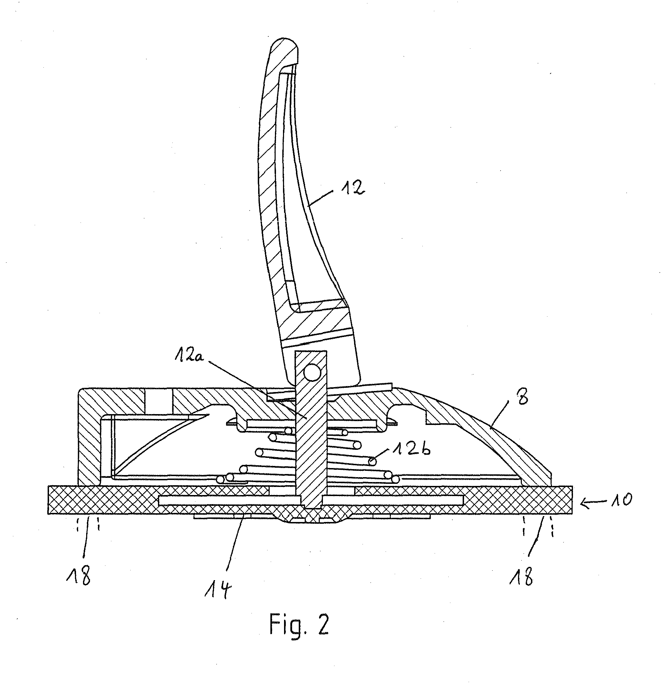

Die Gehäuseschale 8 weist als Mittel zur Erzeugung und/oder Bereitstellung eines Unterdrucks einen Betätigungsmechanismus auf, der ein als Schwenkhebel 12 ausgestaltetes Betätigungsorgan umfasst und mittels eines Verbindungselementes in Form beispielsweise eines einfachen Stößels 12a (vgl. Fig. 2) an einem inneren, rückseitigen Bereich der Saugscheibe 10, vorliegend in deren Zentrum, ankoppelt, so dass bei Betätigung des Schwenkhebels 12 der innere Bereich 14 der Saugscheibe 10 von der Werkstückoberfläche abgehoben und die Saugscheibe 10 annähernd glockenförmig ausgewölbt wird, wodurch sich zwischen der Saugscheibe 10 und der Werkstückoberfläche ein Unterdruck ausbildet. Statt der Ausführung mit zwei Gehäuseschalen 8 und zwei Saugscheiben 10 ist es auch möglich, einen Saugheber 2 mit lediglich einer Gehäuseschale 8 und dementsprechend einer Saugscheibe 10 auszugestalten.

Figur 2 zeigt eine der Saugscheiben 10 mit Gehäuseschale 8 und Betätigungsmechanismus als Bestandteil des Saughebers aus Fig. 1 in Schnittansicht. Erkennbar ist der an seinem einen Ende mit dem Schwenkhebel 12 verbundene und an seinem anderen Ende an die Saugscheibe 10 ankoppelnde Stößel 12a. Gezeigt ist ferner eine Kegelfeder 12b, welche bei Betätigung des Schwenkhebels 12 und daraus resultierender Anhebung des inneren Bereichs 14 der Saugscheibe 10 komprimiert wird, woraus sich eine Rückstellkraft für die Saugscheibe 10 beim Zurückführen des Schwenkhebels 12 in die unbetätigte Position ergibt. Der in Fig. 2 ebenfalls markierte Ringbereich 18 auf der der Gehäuseschale 8 abgewandten Seite der Saugscheibe 10 wird dadurch definiert, dass auf ihm die Gehäuseschale 8 auf der der Werkstückoberfläche abgewandten Seite der Saugscheibe 10 aufliegt, so dass das Material der Saugscheibe 10 in diesem Bereich im betätigten Zustand des Saughebers 2 stark komprimiert wird. Da die ringförmige Auflagefläche der Gehäuseschale 8 auf der Saugscheibe 10 vorliegend im Wesentlichen eben ist, ist auch die Kompression der Saugscheibe 10 im Ringbereich 18 in radialer Betrachtung in guter Näherung konstant und nimmt dort im betätigten Zustand des Saughebers einen Maximalwert an.

In diesem bei Aktivierung des Saughebers 2 maximal komprimierten Bereich kann ferner ein in die flexible Saugscheibe 10 eingebrachtes Versteifungselement, beispielsweise in Form eines einvulkanisierten Aluminiumringes (nicht dargestellt) vorgesehen sein. Ein solches Versteifungselement wird bevorzugt bei solchen Saughebern 2 verwendet, die anstelle eines hebelartigen Betätigungsmechanismus einen Anschluss an eine Unterdruckleitung aufweisen.

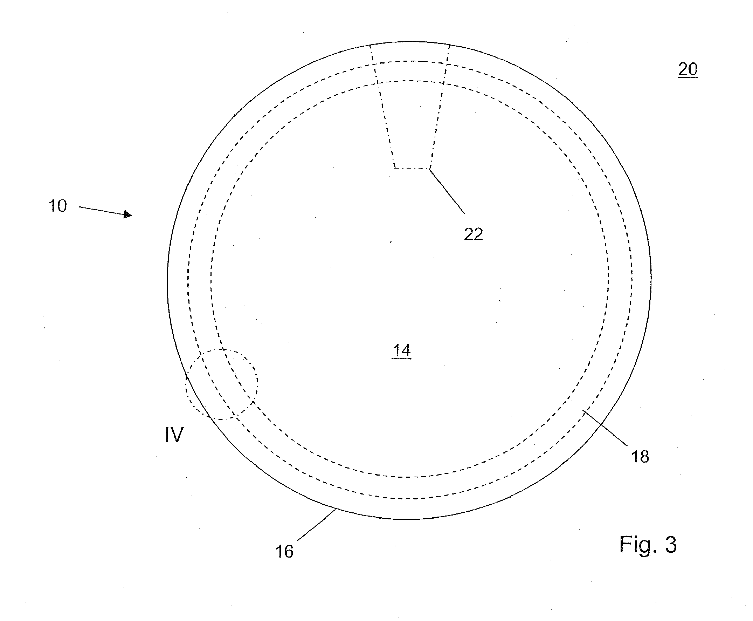

Fig. 3 zeigt eine der Saugscheiben 10 des Saughebers 2 aus Figur 1 von der Vorderseite, also der Seite, welche der Werkstückoberfläche zugewandt ist. Die Saugscheibe 10 weist in diesem Beispiel einen kreisförmigen Rand 16 auf. Es ist ebenfalls möglich, einen ellipsenförmigen, polygonalen oder andersartig geformten Rand vorzusehen. Der zuvor definierte Ringbereich 18 (in Fig. 3 radial begrenzt durch zwei konzentrische, gestrichelte Kreislinien) umgibt etwa konzentrisch den kreisförmigen inneren Bereich 14. Der Ringbereich 18 der Saugscheibe 10 weist eine bestimmte Oberflächen-Mikrostrukturierung aus Erhebungen und Senken auf, welche wenigstens abschnittsweise, vorliegend entlang des gesamten Umfangs, auf der Saugscheibe 10 angeordnet sind. So ist sichergestellt, dass im unbetätigten Zustand eine gasleitende Verbindung zwischen der Umgebung 20 und dem inneren Bereich 14 hergestellt ist. Eine solche ergibt sich jedoch bereits, wenn die Oberflächen-Mikrostrukturierung lediglich in Umfangsrichtung gesehen abschnittsweise in dem Ringbereich 18 vorgesehen wäre, beispielsweise in dem von dem strichpunktiert eingezeichneten Abschnitt 22. Besonders bevorzugt wird jedoch, wie vorliegend, eine Ausbildung entlang des gesamten Umfangs des Ringbereichs.

Radial erstreckt sich die Oberflächen-Mikrostrukturierung im Bereich maximaler Kompression, vorliegend also im Ringbereich 18 der Saugscheibe 10. Bei dem Ausführungsbeispiel der Fig. 3 erstreckt sie sich auch darüber hinaus, nämlich vom Rand 16 der Saugscheibe 10 bis zum inneren Bereich 14, also über den Ringbereich 18 hinweg.

In Figur 3 ist, wie erwähnt, als Beispiel einer nicht vollflächigen Ausgestaltung der Oberflächen-Mikrostrukturierung ein Winkelsegmentabschnitt 22 (strichpunktiert) gezeigt, welcher die erfindungsgemäße Oberflächen-Mikrostrukturierung und damit den weitgehend selbsttätigen Belüftungsmechanismus aufweisen kann. Weiterhin kann die Oberflächen-Mikrostrukturierung sich über die gesamte radiale Ausdehnung der Saugscheibe 10 hinweg erstrecken, lediglich bis in den inneren Bereich 14 hinein reichen, so dass die zentrumsnahen Bereiche des inneren Bereichs 14 der Saugscheibe 10 frei von der Oberflächen-Mikrostrukturierung bleiben, oder auf den Ringbereich 18 und hier auf den Bereich maximaler Kompression beschränkt sein. Durch diese Ausgestaltung kann insbesondere der Herstellungsaufwand des Saughebers 2 verringert werden.

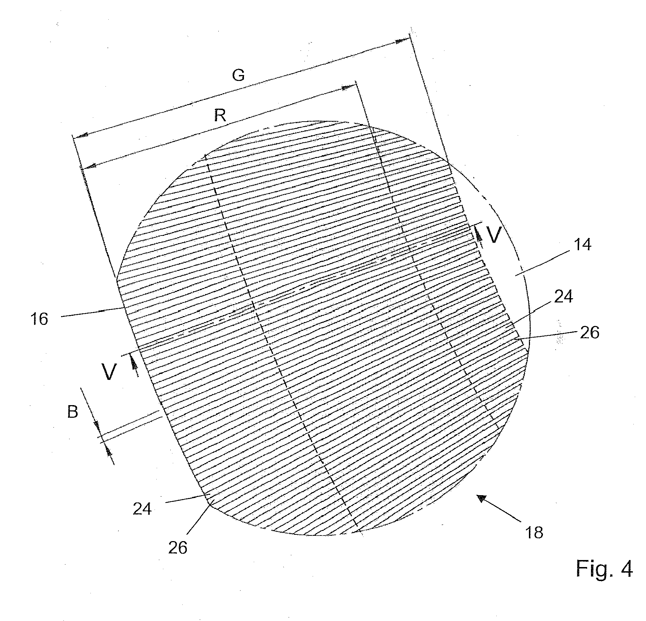

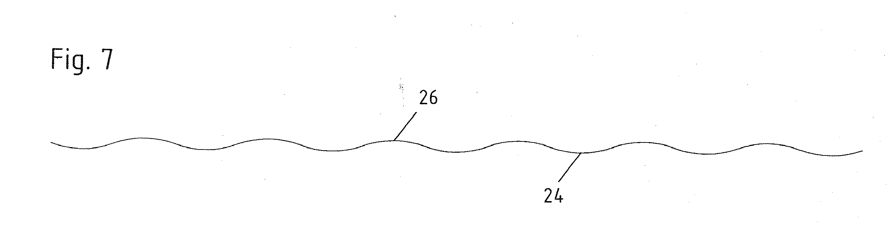

Die in Figur 4 gezeigte Einzelheit IV der Ansicht aus Figur 3 zeigt die Oberflächen-Mikrostrukturierung im Detail. Sie umfasst in diesem Beispiel eine in Umfangsrichtung gesehen sinuswellenförmigen Struktur (vgl. Fig. 7), die sich linear radial vom Rand 16 der Saugscheibe 10 bis in den Übergangsbereich von dem Randbereich 18 in den inneren Bereich 14 und etwas darüber hinaus erstreckt. Die Wellentäler der Wellenstruktur sind dabei mit dem Bezugszeichen 24, die Wellenberge mit dem Bezugszeichen 26 bezeichnet. Der Nulldurchgang der Wellen ist jeweils durch eine radial einwärts laufende Linie gekennzeichnet. Neben einer wellenförmigen Struktur, die den besonderen Vorteil einer gleichmäßigen Nivellierbarkeit aufweist, sind jedoch auch andere Geometrien der Oberflächen-Mikrostrukturierung denkbar, beispielsweise Rillen und Stegen mit im Wesentlichen rechteckigem Querschnitt, wobei die Ecken zwecks einer besseren Verformbarkeit ausgerundet sein sollten, oder eine statistische Ausprägung der Oberflächen-Mikrostrukturierung.

In einer typischen, aber nicht als beschränkend anzusehenden Ausgestaltung kann der Abstand zwischen dem äußeren Rand 16 der Saugscheibe 10 und der radial inneren Ende des Ringbereichs 18 eine radiale Breite R von 12 bis 14 mm aufweisen. Die radiale Erstreckung der Wellenstruktur über den Ringbereich 18 hinaus in den inneren Bereich 14 kann beispielsweise 2 bis 4 mm, insbesondere 3 mm, betragen, so dass eine radiale Gesamterstreckung G der Wellenstruktur von etwa 14 bis 18 mm, insbesondere 15 mm, resultiert. Der im gleichen Winkelsegment radial einwärts auftretenden Flächenverringerung kann - wie in Figur 3 dargestellt - durch eine kontinuierliche Verjüngung der Breite der Wellenberge 26 Rechnung getragen werden, wohingegen die Wellentäler 24 über ihre radiale Erstreckung eine weitgehend konstante Breite B aufweisen. Da die Wellentäler für die Herstellung der gasleitenden Verbindung im unbetätigten Zustand des Saughebers 10 verantwortlich sind, ist eine Beibehaltung der Breite B der Täler 24 besonders vorteilhaft. Die Breite B der Wellentäler 24 und Wellenberge 26 ist am Rand 16 der Saugscheibe 10 im Wesentlichen identisch und beträgt vorzugsweise zwischen 0,2 und 0,4 mm, insbesondere 0,3 mm.

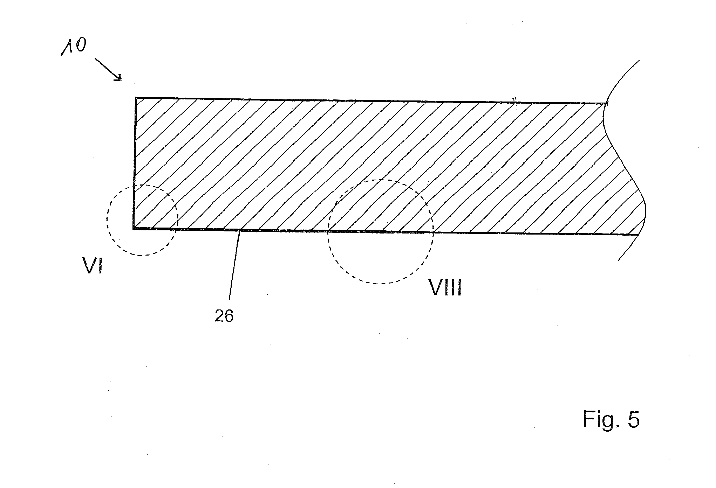

Figur 5 zeigt eine Längsschnittsansicht der Oberflächen-Mikrostrukturierung der Saugscheibe 10, wobei der Längsschnitt in radialer Richtung entlang einer der Wellentäler 24 verläuft, so dass in der Draufsicht einer der Stege 26 zu sehen ist, was infolge der geringen Tiefe der Rillen 24 nur in den im Folgenden beschriebenen Detailzeichnungen erkennbar ist. Aus Gründen der Übersichtlichkeit ist die Trägerschale 8 des Saughebers 2 in Fig. 5 nicht dargestellt.

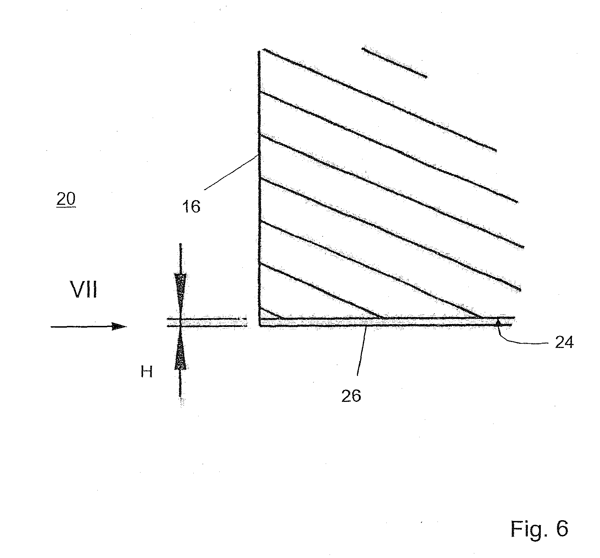

Als weitere Detailzeichnung zeigt Figur 6 hierzu die Höhendifferenz H zwischen Erhebungen und Senken, in diesem Beispiel in Form einer Wellenstruktur mit Wellentälern 24 und Wellenbergen 26, am Rand 16 der Saugscheibe 10. Die Höhendifferenz H kann am Rand 16 der Saugscheibe 10 beispielsweise bei etwa 0,003 mm, d.h. ca. 3 µm, liegen, so dass sich ein Verhältnis der Breite B der Erhebungen und Senken zu der Höhendifferenz H von etwa 100 ergibt.

Die Höhendifferenz H der Erhebungen und Senken gibt das Maß für die Anpresskraft vor, mit welcher die Saugscheibe 10 im Ringbereich 18 gegen die Werkstückoberfläche zu drücken ist, um im betätigten Zustand die Nivellierung der Oberflächen-Mikrostrukturierung und damit den gasdichten Abschluss des inneren Bereichs 14 der Saugscheibe 10 von der Umgebung 20 zu gewährleisten. Insgesamt kann das Verhältnis zwischen der Breite B der Erhebungen und Senken und der Höhendifferenz H 5 bis 1000 betragen, wobei das vorliegend gewählte Verhältnis von 10 bevorzugt ist.

In dem zuvor erläuterten Beispiel weisen die Wellenberge 26 und -täler 24 am Rand 16 und damit in etwa auch am äußeren Rand des Ringbereichs 18 ungefähr die gleiche Breite B auf. Es ist jedoch auch möglich, die Wellenberge 26 und -täler 24 am Rand 16 und damit in etwa auch am äußeren Rand des Ringbereichs 18 mit voneinander abweichenden Breiten auszugestalten. In diesem Fall kann das Verhältnis von Breite B zu Höhendifferenz H auf die Rillen 24 oder die Stege 26 bezogen sein.

In der Figur 7 ist in einer schematischen Darstellung die Oberflächen-Mikrostrukturierung in Form der im Ausführungsbeispiel Sinuswellenstruktur im unbetätigten Zustand des Saughebers 2 als radial einwärtige Draufsicht vom Rand 16 der Saugscheibe 10 entsprechend dem Blickrichtungspfeil VII in Figur 6 gezeigt. Im unbetätigten Zustand stehen die Wellenberge 26 über den Wellentälern 24 vor und stellen dadurch gasleitende Verbindungskanäle für den Druckausgleich zwischen der Umgebung 20 und dem inneren Bereich 14 des Saughebers 2 zur Verfügung. Im betätigten Zustand des Saughebers 2 sind die Wellenberge 26 auf die Höhe der Wellentäler 24 infolge einer hinreichenden Anpresskraft an die Werkstückoberfläche und der daraus resultierenden Kompression der Saugscheibe im Ringbereich 18 nivelliert, d.h. eingeebnet, und gewährleisten somit eine großflächige, insbesondere vollflächige, Anlage der Saugscheibe 10 im Randbereich 18 mit der Werkstückoberfläche. Die ursprüngliche Wellenprofilierung des Ringbereichs 18 entsprechend Fig. 7 ließe sich im betätigten Zustand des Saughebers somit als einfache horizontale gerade Linie darstellen. Die gasleitende Verbindung ist dann verschlossen und der Unterdruck in dem zwischen dem inneren Bereich 14 der Saugscheibe 10 und der Werkstückoberfläche gebildeten Volumen kann somit erzeugt und aufrechterhalten werden.

Vorzugsweise ist die Saugscheibe 10 aus einem Material mit einer Shore-A-Härte von 30 bis 70, bevorzugt 45 bis 60, ausgebildet. Eine solche Shore-A-Härte kann beispielsweise durch die vorliegend verwendete Mischung aus Styrol-Butadien-Kautschuk und Naturkautschuk erzielt werden.

Alternativ zu einer vollflächigen Ausgestaltung des Randbereichs 18 kann lediglich der mit der Oberflächen-Mikrostrukturierung versehene Abschnitt der Saugscheibe 10 (vgl. Abschnitt 22 in Fig. 2) aus dem Material mit bestimmter Shore-A-Härte ausgebildet sein.

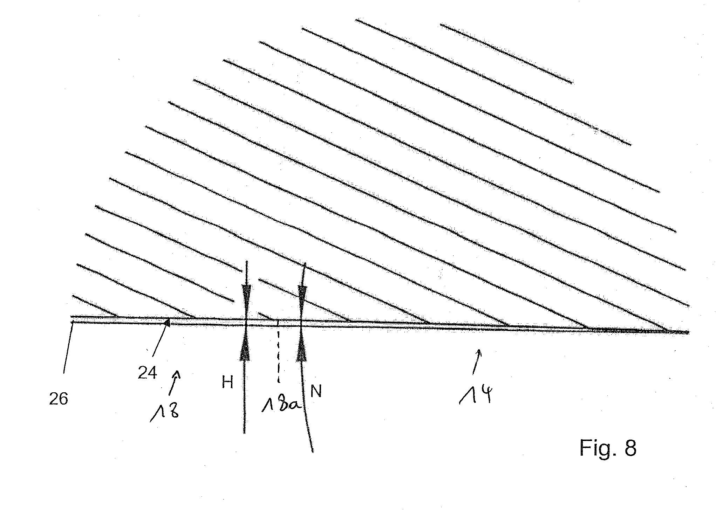

Figur 8 zeigt ein weiteres Detail der Querschnittsansicht aus Figur 4 gemäß der Einzelheit VIII. Die Höhendifferenz H zwischen den Erhebungen und Senken, in diesem Beispiel den Wellenbergen 26 und -tälern 24, nimmt von einem bestimmten Punkt in der radialen Erstreckung der Wellenstruktur radial einwärts bis in den inneren Bereich 14 der Saugscheibe 10 ab, so dass die Wellentäler 24 quasi stufenlos auslaufen. Der Neigungswinkel N der Wellentäler 24 kann beispielsweise zwischen 0,04 und 0,06° liegen. Statt eines linearen Verlaufs kann die Änderung der Höhendifferenz H auch einen kurvigen Verlauf aufweisen. Auf diese Weise kann der gasdichte Abschluss des inneren Bereichs 14 von der Umgebung 20 im Übergangsbereich von dem inneren Bereich 14 in den Ringbereich 18, wo die durch den Unterdruck hervorgerufene Anpresskraft auf Grund der Auswölbung der Saugscheibe 10 reduziert ist, erleichtert werden. Entscheidend ist dabei, dass die Verringerung der Höhendifferenz H nicht bereits innerhalb des Ringbereichs 18 beginnt, um eine anschließende Belüftung nach Deaktivierung des Saughebers 2 zu erreichen. In Fig. 8 ist die innere Begrenzung 18a des Ringbereichs 18 hierzu markiert. Wie in Fig.8 dargestellt, ist die Höhendifferenz H innerhalb des Ringbereichs 18 im Wesentlichen konstant, während die kontinuierliche Verringerung der Höhendifferenz H radial einwärts im inneren Bereich beginnt, wo keine signifikante Materialkompression im betätigten Zustand des Saughebers 2 mehr erfolgt.

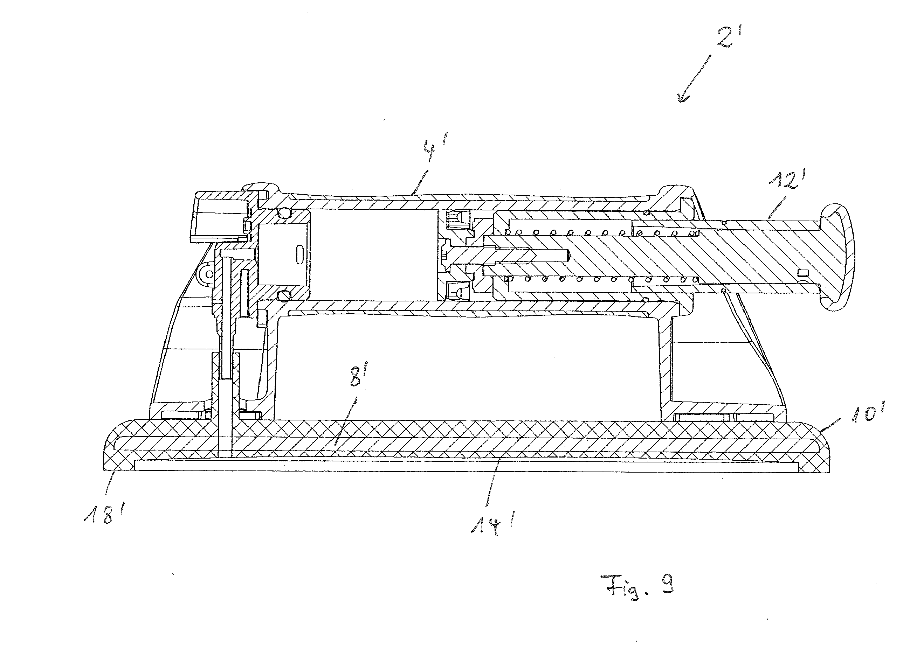

Fig. 9 zeigt eine abgewandelte Ausführungsform eines Saughebers 2', bei dem das formsteife Strukturelement nicht als Gehäuseschale, sondern ausschließlich als in die Saugscheibe 10' einvulkanisierte Versteifungsplatte 8', beispielsweise aus Aluminium, ausgebildet ist. Die Saugscheibe 10' weist eine leicht gewölbte Unterseite auf, die von einem umlaufenden verdickten Randbereich 18' umgeben ist und mit einer ebenen Werkstückoberfläche (nicht dargestellt) ein nichtverschwindendes Volumen einschließt. Durch den auf der Werkstückoberfläche aufliegenden Randbereich 18' wird ein ringförmiger Bereich definiert, welcher im betätigten Zustand des Saughebers einer maximalen Kompression ausgesetzt ist. Entsprechend ist in dem Randbereich 18' bezogen auf seine umfangsmäßige Erstreckung zumindest abschnittsweise eine Oberflächen-Mikrostrukturierung mit Erhebungen und Senken ausgebildet (nicht erkennbar in Fig. 9), die beispielsweise die in Fig. 4 dargestellte Struktur aufweisen kann.

Der Saugheber 2' der Fig. 9 umfasst ferner ein mit der Saugscheibe 10' beispielsweise verschraubtes Griffstück 4', an dem eine teleskopartig zu betätigende Pumpe 12a' angeordnet ist, über welche das zwischen dem inneren Bereich 14' der Saugscheibe 10', welcher von dem umlaufenden verdickten Randbereich 18' umschlossen wird, und der Werkstückoberfläche eingeschlossene Volumen evakuiert werden kann. Dabei wird die in dem Randbereich 18' zumindest abschnittweise vorgesehene Oberflächen-Mikrostrukturierung durch die durch den Unterdruck erzeugte Anpresskraft auf die Werkstückoberfläche nivelliert, wogegen sie sich im unbetätigten Zustand des Saughebers, d.h. nach Wiederbelüftung des eingeschlossenen Volumens, derart regeneriert, dass eine gasleitende Verbindung zwischen der Umgebung und dem gewölbten inneren Bereich hergestellt wird.

Es versteht sich, dass anstelle einer in das Griffstück 4 integrierten Handpumpe 12a' auch eine externe elektrische Pumpe (nicht dargestellt) vorgesehen sein kann, welche über eine Unterdruckleitung mit dem Saugheber 2' verbunden ist. Ferner kann anstelle des Griffstücks eine Adaptereinrichtung vorgesehen sein, die eine Mehrzahl gleichartiger Saugscheiben zu einer Hebeanordnung verbinden kann. Die Adaptereinrichtung kann dann ihrerseits mit einer Krananlage verbunden sein, wodurch eine industrielle Hebeeinrichtung realisiert ist.

## Patentansprüche

1. Saugheber (2) zur temporären Fixierung an einer Werkstückoberfläche, mit einem formsteifen Strukturelement (8), mit wenigstens einer flexiblen Saugscheibe (10) und mit wenigstens einem Mittel zur Erzeugung und/oder Bereitstellung eines Unterdrucks in einem inneren Bereich (14) der Saugscheibe (10),
**dadurch gekennzeichnet, dass**
die Saugscheibe (10) einen den inneren Bereich (14) umgebenden, durch das formsteife Strukturelement (8) definierten Ringbereich (18) aufweist, in welchem das Material der Saugscheibe (10) im betätigten Zustand des Saughebers (2) komprimiert wird, wobei der Ringbereich (18) zumindest im Bereich maximaler Kompression und bezogen auf seine Umfangserstreckung zumindest abschnittsweise eine Oberflächen-Mikrostrukturierung mit Erhebungen und Senken aufweist, wobei die Oberflächen-Mikrostrukturierung im betätigten Zustand des Saughebers (2) durch die durch den Unterdruck erzeugte Anpresskraft auf die Werkstückoberfläche nivelliert ist und im unbetätigten Zustand sich derart regeneriert, dass eine gasleitende Verbindung zwischen der Umgebung (20) und dem inneren Bereich (14) hergestellt wird.

2. Saugheber (2) nach Anspruch 1,
**dadurch gekennzeichnet, dass**
das formsteife Strukturelement als auf der der Werkstückoberfläche abgewandten Seite der Saugscheibe (10) aufliegende Gehäuseschale (8) ausgebildet ist.

3. Saugheber nach Anspruch 1 oder 2,
**dadurch gekennzeichnet, dass**
das formsteife Strukturelement als in die Saugscheibe (10) eingebrachtes Versteifungselement ausgebildet ist.

4. Saugheber (2) nach einem der Ansprüche 1 bis 3,
**dadurch gekennzeichnet, dass**
das Mittel zur Erzeugung und/oder Bereitstellung des Unterdrucks als Betätigungsmechanismus zum Anheben des inneren Bereiches (14) von der Werkstückoberfläche ausgebildet ist.

5. Saugheber (2) nach einem der Ansprüche 1 bis 4,
**dadurch gekennzeichnet, dass**
die Höhendifferenz (H) zwischen den Erhebungen und den Senken der Oberflächenstrukturierung im Ringbereich (18) zumindest im Bereich maximaler Kompression konstant ist und radial in Richtung des inneren Bereiches (14) abnimmt.

6. Saugheber (2) nach einem der Ansprüche 1 bis 5,
**dadurch gekennzeichnet, dass**
die Oberflächenstrukturierung im Querschnitt durch eine stetig differenzierbare Konturlinie beschreibbar ist.

7. Saugheber (2) nach Anspruch 6,
**dadurch gekennzeichnet, dass**
die Oberflächenstrukturierung wellenförmig, insbesondere sinusförmig, ausgebildet ist.

8. Saugheber (2) nach einem der Ansprüche 1 bis 7,
**dadurch gekennzeichnet, dass**
die Erhebungen und Senken als Stege (26) und Rillen (24) ausgebildet sind, welche wenigstens teilweise radial, insbesondere linear radial oder spiralförmig, verlaufen.

9. Saugheber (2) nach Anspruch 8,
**dadurch gekennzeichnet, dass**
das Verhältnis der Breite (B) der Erhebungen und Senken zu der Höhendifferenz (H) zwischen 5 und 1000, insbesondere bei 100, liegt.

10. Saugheber (2) nach einem der Ansprüche 1 bis 5,
**dadurch gekennzeichnet, dass**
die Oberflächenstrukturierung mit Erhebungen und Senken statistisch ausgeprägt ist.

11. Saugheber (2) nach einem der Ansprüche 1 bis 10,
**dadurch gekennzeichnet, dass**
sich die Oberflächenstrukturierung von dem Ringbereich (18) bis zum Rand (16) der Saugscheibe (10) erstreckt.

12. Saugheber (2) nach einem der Ansprüche 1 bis 11,
**dadurch gekennzeichnet, dass**
die Saugscheibe (10) aus einer Mischung aus Styrol-Butadien-Kautschuk und Naturkautschuk gebildet ist.

13. Saugheber (2) nach einem der Ansprüche 1 bis 12,
**dadurch gekennzeichnet, dass**
die Saugscheibe (10) wenigstens abschnittsweise aus einem Material mit einer Shore-A-Härte zwischen 30 und 70, insbesondere 45 bis 60, gebildet ist.

14. Saugheber (2) nach einem der Ansprüche 1 bis 13,
**dadurch gekennzeichnet, dass**
sich die Oberflächenstrukturierung über den gesamten Ringbereich (18) bezogen auf seinen Umfang erstreckt.
